# EUROPEAN PATENT APPLICATION

(11) **EP 0 948 214 A2**
(43) Date of publication of application: **06.10.1999**
(21) Application number: 99200584.3
(22) Date of filing: 02.03.1999
(51) Int. Cl.: H04N 7/62

(54) **Method and apparatus for detecting a start code in a bitstream**

(30) Priority: 03.04.1998 GB 9807208
(71) Applicant: NDS LIMITED, West Drayton, Middlesex UB7 ODQ (GB)
(72) Inventor: Murray, Kevin Alistair, Lockerley, Romsey, Hampshire SO51 0JR (GB); Davies, Colin, Fordingbridge, Hampshire SP6 2NS (GB); Stubbings, Clive Anthony, Eastleigh, Hampshire SO50 7NW (GB); Huggett, Anthony Richard, Eastleigh, Hampshire SO50 5 PZ (GB); Warburton, Richard John, Hedge End, Southhampton SO30 2RP (GB); Funnel, John Stuart, Northlands Road, Southhampton SO15 2TU (GB)
(74) Representative: Anderson, Angela Mary

(57) **Abstract**

The present invention relates to the detection of a predetermined sequence in a digital bit-stream, and more particularly a method and apparatus for the fast and efficient detection of a start code sequence.

As with many packet based bit-streams, packets are identified through the use of a start code. The start code is a unique sequence which occurs only to indicate the start of a packet, and can never occur in the data portion of a bit-stream. Identifying the start of packets is crucial in the processing of packetised bit-streams.

In the field of digital broadcasting, a common format of digital video compression is that of the Moving Picture Expert Group (MPEG). MPEG uses a packetised bit-stream and packets are preceded by a start code to enable individual packets to be identified. In any real-time processing of MPEG bit-streams, it is vital to be able to identify the MPEG start codes as quickly and efficiently as possible. Performing this in hardware is a relatively straightforward operation. Detecting start codes using software is also straightforward in a non real-time situation. However, where an end-to-end real-time software solution is required to process MPEG data it may not be possible or desirable to use a hardware-based solution.

The present invention overcomes the problems of the prior art and provides a method and apparatus for the fast and efficient detection of the MPEG start code sequence.

## Description

The present invention relates to the detection of a predetermined sequence in a digital bit-stream, and more particularly a method and apparatus for the fast and efficient detection of a start code sequence.

As with many packet based bit-streams, packets are identified through the use of a start code. The start code is a unique sequence which occurs only to indicate the start of a packet, and can never occur in the data portion of a bit-stream. Identifying the start of packets is crucial in the processing of packetised bit-streams.

In the field of digital broadcasting, a common format of digital video compression is that of the Motion Picture Experts Group (MPEG). MPEG uses a packetised bit-stream and packets are preceded by a start code to enable individual packets to be identified.

An MPEG header start code sequence is a unique code sequence that can only ever occur in an MPEG bit-stream as a header start code. It consists of 23 binary zeroes followed by a single binary 1.

In any real-time processing of MPEG bit-streams, it is vital to be able to identify the MPEG start codes as quickly and efficiently as possible. Performing this in hardware is a relatively straighfforward operation. Detecting start codes using software is also straighfforward in a non real-time situation. However, where an end-to-end real-time software solution is required to process MPEG data it may not be possible or desirable to use a hardware-based solution.

One such application is the processing involved in encoding a HDTV image using a number of standard encoders to produce a HDTV bit stream. One such technique is described in our co-pending United Kingdom patent applications 9807203.6 and 9807205.1. The technique involves processing a plurality of encoded standard television bit-streams and converting them to a single encoded high definition television bit-stream in real-time. The quantity of data to be processed and the data rates involved in this sort of application are obviously enormous, and therefore being able to detect the start of packets as quickly and efficiently as possible is of paramount importance.

In such an application, which is predominantly software based, it is beneficial that as much of the functionality as possible is dealt with by the software. If a software solution approach is used, it is often not desirable to employ hardware start code detection methods. One reason is that the increased complexity needed to interface with the hardware and the extra time taken to access the hardware often make this approach less than ideal, especially where the bulk of the processing is carried out by suitably programmed microprocessors.

The techniques commonly employed in hardware based solutions do not translate well into software solutions.

A common software method for identifying start codes involves testing every byte of the input data, resulting in four operations per 32-bit data word, together with the operations needed to support a limited finite state machine that counts the number of zero bytes that have been identified. A byte is a collection of 8 bits, and a word (as used in this specification) is a collection of 32 bits, or four bytes. The speed of this technique is limited both by the number of operations involved and by the fact that byte data accessing is inefficient on modern 32-bit CPUs. Due to the huge quantity of data that needs processing, reducing the number of operations involved in detecting start codes can result in significant speed improvements.

One solution is to continuing using existing techniques and to use even more powerful processors to but this will ultimately increase costs and further increases in complexity.

The methods of the prior art therefore fail to provide any suitable methods of detecting such start codes for use in a real-time software application.

Accordingly, one object of the present invention is to provide a method for the fast and efficient detection of the MPEG start code sequence.

According to one aspect of the present invention there is provided a method of detecting a specific bit sequence in a stream of digital data, the method comprising the steps of: comparing a first section of a sequence of bits with a first reference; comparing a second section of the sequence with a second reference; comparing a third section of the sequence with a third reference; and comparing the results of the comparing steps with a first predetermined set of results and where there is a match the predetermined bit sequence is detected and where there is no match the predetermined bit sequence is not detected.

According to a second aspect of the present invention there is provided apparatus for detecting a specific bit sequence in a stream of digital data, the apparatus comprising: a first comparitor for comparing a first section of a sequence of bits with a first reference, comparing a second section of the sequence with a second reference, comparing a third section of the sequence with a third reference; and a second comparitor for comparing the results from the first comparitor with a first predetermined set of results and where there is a match the predetermined bit sequence is detected and where there is no match the predetermined sequence is not detected.

The present invention overcomes the problems of speed and processor requirements of the prior art, and provides a quick and efficient way of detecting the start code sequence in real-time. The method is such that additional processing power is not needed, even to detect the start code sequence in real-time. This has the added benefits of keeping costs to a minimum whilst providing all the functionality of a much more complex and costly solution.

The invention will now be described, with reference to the accompanying drawings, in which:
Figure 1 is a diagram depicting the presence of an MPEG start code sequence within an MPEG bit-stream; and
Figure 2 is a flow diagram illustrating one embodiment of the present invention.

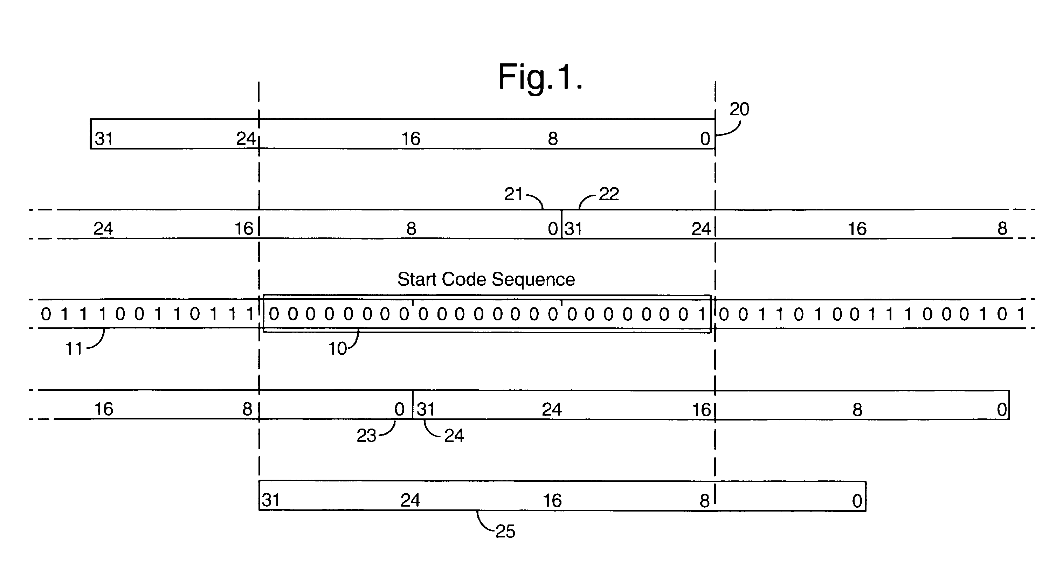

Figure 1 is a diagram showing part of an MPEG bit-stream 11. The bit-stream 11 consists of data and a MPEG header code start sequence 10 is also present. The bit-stream is read into a data register and connected to a processing unit (not shown).

Although the start code sequence is of a known format, its detection is made more difficult due to the way in which the start code can occur anywhere in the bit-stream, on a byte boundary (i.e. aligned to a group of 8 bits). The start code may not, therefore, coincide with a register boundary and, as a result, a start code sequence could overrun into two or more registers (depending on the size of the register used). The result of this is that the start code could appear at a number of different places within a data register. This is illustrated in Figure 1 by a number of data register positions 20 to 25. This means that detection of the start code sequence cannot be performed by a simple mask and compare operation.

According to the present invention the data register is a 32 bit register but is not restricted thereto. A number of data register positions are shown 20 to 25, each position showing the data register aligned to a different byte boundary. The positions of bit 0 and bit 31 of each data register is shown where appropriate. It can be seen that the start code sequence can occur at a number of different positions within a data register. Data register positions 20 and 25 show where a start code sequence is completely contained in a single data register. Data register positions 21, 22, 23 and 24 show where the start code straddles two data registers.

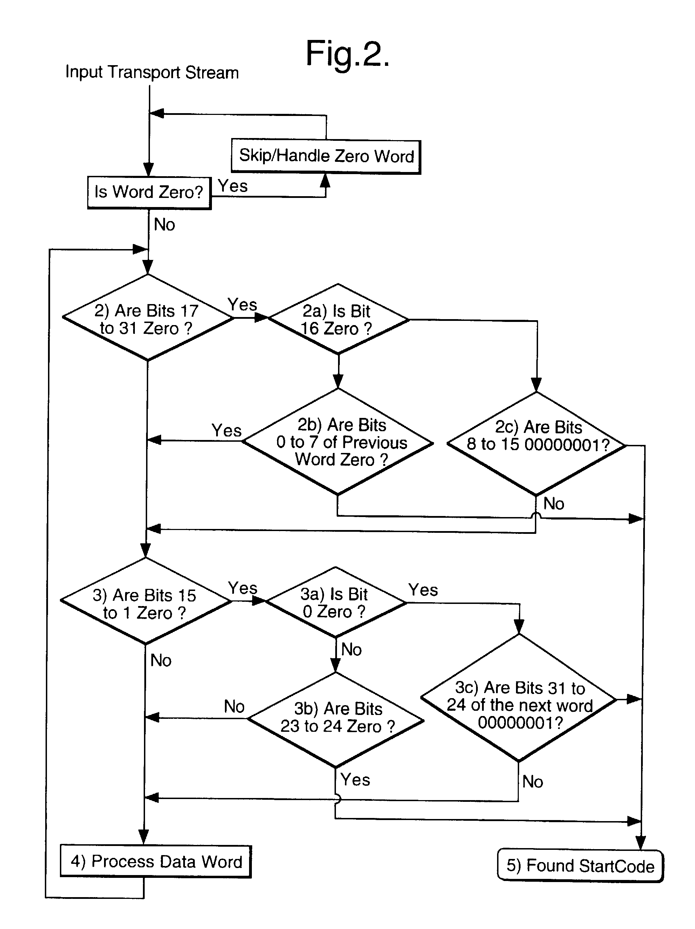

Figure 2 outlines an algorithmic high speed solution to this problem. For clarity, the diagram omits the detection of the end of packet sequence, and the handling of header codes which straddle packet boundaries.

Figure 2 is a diagram of a flow diagram outlining the method of the present invention. The diagram can be broken down into three main steps, step 1, step 2 and step 3.

Starting with step 2, this performs the first part of the test to detect a start code. Step 2 tests the top part of the data register to see if bits 31 to 17 are zero. If they are not, step 3 tests the bottom part of the data register to see if bits 15 to 1 are zero. If they are not zero then a start code is not present in the data register. In the majority of cases a start code will not be present and therefore most of the 32-bit words that comprise MPEG data can be searched in just two operations. This provides a significant reduction in processing time compared with the prior art methods using a finite state machine. In processors (such as digital signal processors) equipped with special purpose shifters, extracting a group of bits from a word together with testing for those bits for being zero can be done in a single operation.

Step 2 effectively identifies the possibility of a start code being present in the data register. If there is a possibility of a start code being present there are then two situations which might apply, which are verified by steps 2b or 2c. If step 2a detects that bit 16 is zero, this indicates there is a sequence of 16 zeros, and the start-code will occur if the next eight bits (bits 15 to 8 in the current word) are seven zeros followed by a one. This is tested by step 2c. If bit 16 is a one, then this indicates there is a sequence of 15 zeros followed by a one, and therefore a start code exists if the previous eight bits (bits 7 to 0 of the previous word) were all zeros. Step 2b identifies this sequence or continues searching the data.

Step 3 of Figure 2 performs a similar operation on the bottom 16 bits of the data. Again there are two cases which can indicate a valid start code, and step 3a identifies which of the two cases might apply. Step 3b identifies a start code contained completely with the current word, and step 3c identifies a start code which straddles the word boundary (i.e. with the final 7 zeros and 1 one in the next word).

Referring back to Figure 1 and the data register at position 20. Step 2 then compares bits 31 to 17 with 0, which they are not. Step 3 then compares bits 15 to 1 with zero which they are. Step 3a then compares bit 0 with zero, which it is not. Finally, step 3b compares bits 23 to 24 with zero, which they are indicating a start code has been detected.

Looking now at the data register in position 25. Step 2 compares bits 31 to 17 with zero, which they are. Step 2a then compares bit 16 with zero, which it is. Finally, step 2c compares bits 15 to 8 with 000000012 (binary), which they are indicating a start code has been detected.

Looking now at the first case where the start code straddles two data registers, with the data registers 21 and 22. Step 2 compares bits 31 to 17 of data register 21, which they are not. Step 3 then compares bits 15 to 1 with zero, which they are. Step 3a compares bit 0 with zero which it is. Step 3c then compares bits 31 to 24 of the next word (data register 22) with 000000012 (binary), which they are indicating a start code has been detected.

Finally, in the case of data registers 23 and 24, step 2 compares bits 31 to 17 with zero, which they are not. Step 3 then compares bits 15 to 1 with zero, which they are not. In this case, the next data register is used and the test repeated. So, step 2 now compares bits 31 to 17 of data register 24 with zero, which they are. Step 2a then compares bit 16 with zero, which it is not. Step 2b then compares bits 7 to 0 of the previous word (data register 23) with zero, which they are indicating a start code has been detected.

Identifying whether or not these potential start code cases are actually start codes is comparatively costly (steps 2a, 2b and 2c or 3a 3b and 3c) and it is therefore important to reduce the number of "false" identifications. These situations occur most commonly where the data is a continuous series of zeros, which occurs as video stuffing data and may continue for a long period. Step 1 is therefore provided to check for a full word of zeros at the start of a data segment, and if it finds one it skips it until a non-zero word arrives, when it is processed normally.

The effect of step 1, comprising steps 1a and 1b, is a significant improvement over the prior art in the processing of data containing stuffing or large quantities of zero bytes. Step 1 only requires a single operation for each input packet (i.e. one test per 46 data words) where stuffing does not occur. Where stuffing is present the processing involves only a single operation per word (rather than the normal two operations per word).

The present invention is of particular application in any software based processing system. As mentioned above, the detection of start codes is easily and quickly achieved in hardware, however in real-time software solutions the use of hardware detectors is often not desirable, due to the extra complexity introduced.

The present invention has particular application in the real-time conversion of multiple MP@ML streams into a single ML@HL stream as described in greater detail in our co-pending patent applications 9807203.6 and 9807205.1. The present invention reduces the (average) number of operations to identify start codes in an MPEG-2 stream which significantly reduces the need for processing power, thereby reducing the cost of a software based solution or allowing an increase in the functionality the software can provide.

## Claims

1. A method of detecting a specific bit sequence in a stream of digital data, the method comprising the steps of:
comparing a first section of a sequence of bits with a first reference;
comparing a second section of the sequence with a second reference;
comparing a third section of the sequence with a third reference; and
comparing the results of the comparing steps with a first predetermined set of results and where there is a match the predetermined bit sequence is detected and where there is no match the predetermined bit sequence is not detected.

2. The method of claim 1, further comprising, where the predetermined bit sequence is not detected:
comparing a fourth section of the sequence with a fourth reference;
comparing a fifth section of the sequence with a fifth reference;
comparing a sixth section of the sequence with a sixth reference; and
comparing the results of the further comparing steps with a second set of predetermined set of results and where there is a match the predetermined bit sequence is detected and where there is no match the predetermined sequence is not detected.

3. The method of claims 1 or 2, further comprising the first, second, fourth and fifth references being the same.

4. Apparatus for detecting a specific bit sequence in a stream of digital data, the apparatus comprising:
a first comparitor for comparing a first section of a sequence of bits with a first reference, comparing a second section of the sequence with a second reference, comparing a third section of the sequence with a third reference; and
a second comparitor for comparing the results from the first comparitor with a first predetermined set of results and where there is a match the predetermined bit sequence is detected and where there is no match the predetermined sequence is not detected.

5. The apparatus of claim 4, further comprising, where the predetermined bit sequence is not detected, the first comparitor adapted for comparing a fourth section with a fourth reference, comparing a fifth section with a fifth reference, comparing a sixth section with a sixth reference and the second comparitor adapted for comparing the results of the further comparing steps with a second predetermined set of results and where there is a match the predetermined bit sequence is detected and where there is no match the predetermined sequence is not detected.
